# FASCICULE DE BREVET EUROPEEN

(11) **EP 4 244 108 B1**
(45) Date de publication et mention de la délivrance du brevet: **26.11.2025**
(21) Numéro de dépôt: 21810654.0
(22) Date de dépôt: 19.10.2021
(51) Int. Cl.: B60W 60/00, B60W 30/18

(54) **PROCÉDÉ ET DISPOSITIF DE CONDUITE D'UN VÉHICULE AUTONOME CIRCULANT SUR UNE PREMIÈRE VOIE DE CIRCULATION**
VERFAHREN UND VORRICHTUNG ZUM FAHREN EINES AUTONOMEN FAHRZEUGS, DAS IN EINER ERSTEN FAHRSPUR FÄHRT
METHOD AND DEVICE FOR DRIVING AN AUTONOMOUS VEHICLE TRAVELLING IN A FIRST TRAFFIC LANE

(30) Priorité: 13.11.2020 FR 2011637
(43) Date de publication de la demande: 20.09.2023
(73) Titulaire: Stellantis Auto SAS, 78300 Poissy (FR)
(72) Inventeur: ABOUESSIRE, Ismail, Marrakech, 40160 (MA); ABOULISSANE, Badreddine, TAROUDANT, 83350 (MA)
(74) Mandataire: ESIP
(86) Numéro de dépôt international: PCT/FR2021/051813
(87) Numéro de publication internationale: WO 2022/101564

(56) Documents cités:
- US-A1- 2020 269 839
- US-A1- 2020 307 582
- US-A1- 2020 307 600

## Description

La présente invention revendique la priorité de la demande française 2011637 déposée le 13.11.2020

L'invention est dans le domaine des systèmes d'aide à la conduite d'un véhicule autonome. En particulier, l'invention est sur le pilotage du véhicule autonome d'une première voie vers une deuxième voie.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Les systèmes d'aide à la conduite de type changement de voie, dits également systèmes d'aide au changement de voie, sont connus. Après détermination de conditions de faisabilité, ils pilotent de manière autonome le véhicule autonome d'une première voie, dit égo-voie, vers une deuxième voie, dit voie cible, selon une trajectoire planifiée et calculée lors de la détermination des conditions de faisabilité. La deuxième voie est adjacente à la première voie. La voie adjacente est sur un côté gauche ou sur un côté droit du véhicule.

Ces systèmes comportent des capteurs aptes détecter l'environnement et des objets adjacents d'un véhicule comportant un de ces systèmes. En particulier, ces systèmes sont aptes à mesurer des positions, des distances inter-véhiculaire, des vitesses et des accélérations des objets adjacents du véhicule.

Dans certaines conditions, une trajectoire de changement de voie pour aller d'une première voie vers une deuxième voie est déterminée. Le conducteur du véhicule en est informé, et si le conducteur manifeste son accord, par exemple en désignant le côté de la deuxième voie activant le clignotant du côté de la deuxième voie, ces dits systèmes pilotent alors automatiquement le véhicule pour que le véhicule rejoigne le centre de la voie cible. Une des conditions nécessaires est que préalablement au changement de voie, qu'une fonction de maintien dans la voie est activée. Ainsi, à la fin de la manœuvre de changement de voie, le véhicule est maintenu de manière autonome dans la nouvelle voie.

Le changement de voie est l'une des manœuvres les plus dangereuses. La manœuvre dure environ 5 secondes. Le risque de collision est important. Toutes les situations ne peuvent pas être prises en compte par les capteurs. Actuellement, pendant le pilotage autonome, dès que le conducteur exerce un effort, un couple volant, sur le volant, le pilotage est arrêté. En effet, le coupe sur le volant exercé par le conducteur entraine une modification de l'angle de braquage des roues, et donc une modification de trajectoire du véhicule. Cette trajectoire est donc différente de la trajectoire déterminée par le système d'aide à la conduite. Ceci perturbe le pilotage qui cherche à ce que le véhicule suive la trajectoire déterminée par le système d'aide à la conduite. Le pilotage est arrêté et c'est le conducteur qui pilote à nouveau le véhicule. Même si le conducteur touche par inadvertance le volant ou si le conducteur souhaite soit aider soit accélérer la manœuvre, l'assistance de conduite est arrêtée. Egalement, comme la manœuvre de changement de voie est interrompue, la fonction de maintien dans la voie est interrompue aussi. Dans certaines situations, le conducteur n'est pas prêt à prendre totalement le pilotage et de maintenir le véhicule dans la nouvelle voie.

On connait par le document US 2020/269839 A1 une fonction ACC améliorée. On connait par le document US 2020/307582 A1 un système de contrôle de vitesse et de trajectoire d'un véhicule. On connait par le document US 2020/307600 A1 un système de génération de trajectoire d'un véhicule et de contrôle de changement de voie.

Un objet de la présente invention est de remédier au problème précité, en particulier l'invention aide à effectuer le changement de voie plus rapidement sans perdre l'activation de la fonction de maintien dans la voie.

A cet effet, un premier aspect de l'invention concerne un procédé de conduite d'un véhicule autonome circulant sur une première voie de circulation, ledit procédé comportant les étapes de :
- Exécution d'un changement de voie autonome pilotant ledit véhicule autonome de la première voie de circulation vers une deuxième voie de circulation selon une trajectoire planifiée, ladite deuxième voie de circulation étant une voie adjacente située sur un côté désigné, gauche ou droit, par rapport à la première voie de circulation ;
- Acquisition d'une information d'un couple volant résultant d'un effort de rotation appliqué sur le volant par le conducteur ;
- Détermination d'un côté, gauche ou droit, dit côté couple, en fonction de l'information du couple volant ;
- Si le côté couple est identique au côté désigné et
   ∘ Si la valeur absolue de l'information couple volant est supérieure à un seuil maximum prédéterminé, alors le pilotage de changement de voie est arrêté ;
   ∘ Si la valeur absolue de l'information couple volant est inférieure audit seuil maximum prédéterminé, alors le pilotage de changement de voie est maintenu.

Ainsi le pilotage du changement de manœuvre n'est pas arrêté lorsque le côté couple est le même que le côté désigné et lorsque la valeur absolue de l'information couple volant reste inférieure à un seuil maximum prédéterminée. Le conducteur ajoute un couple volant faible dans le bon sens du déplacement ce qui perturbe peu le pilotage de changement de manœuvre et aide à quitter plus vite la première voie de circulation.

Selon l'invention, lorsque le côté couple est le même que le côté désigné et lorsque la valeur absolue de l'information couple volant est comprise entre un seuil minimum prédéterminée et audit seuil maximum prédéterminé, alors la trajectoire planifiée est calculée de nouveau pour correspondre à une durée de changement de voie plus courte.

Ainsi, le conducteur manifeste une seconde fois son accord pour changer de voie. Il indique sa volonté de changer de voie plus rapidement ayant détecter, par exemple, une situation angoissante. La volonté est devenue claire avec un couple volant supérieur à la valeur minimum prédéterminée. Le pilotage de changement de voie est alors adapté en re-planifiant la trajectoire pour atteindre plus rapidement le centre de la deuxième voie (par exemple en 4 secondes au lieu des classiques 5 secondes). Cette adaptation évite que la trajectoire du véhicule fasse un déport important (« over shoot ») par rapport au milieu de la deuxième voie si le pilotage de changement de voie est arrêté. En effet, si le pilotage de changement de voie s'arrête brusquement pendant la manœuvre laissant le pilotage au conducteur, ce dernier ne sait pas quelle est le bon effort de rotation à appliquer sur la volant en fonction de la vitesse du véhicule et des conditions de la route (dont l'adhérence).

Avantageusement, si le côté couple est différent au côté désigné, et si la valeur absolue de l'information couple volant est inférieure audit seuil minimum prédéterminé, alors le pilotage de changement de voie est maintenu.

Ainsi, lorsque le conducteur touche par inadvertance le volant et de manière faible, le pilotage de changement de voie est peu perturbé. Dans ce cas, le pilotage n'est pas interrompu.

Avantageusement, le procédé comporte une étape préliminaire de détermination d'une première trajectoire planifiée et d'une deuxième trajectoire planifiée, la deuxième trajectoire ayant une durée de manœuvre de changement de voie plus courte que la durée de changement de voie de la première trajectoire, et l'exécution d'un changement de voie autonome pilotant ledit véhicule autonome de la première voie de circulation vers une deuxième voie de circulation est selon la première trajectoire planifiée, si le côté couple est identique au côté désigne, et si la valeur absolue de l'information couple volant est inférieure audit seuil maximum prédéterminé, alors le pilotage de changement de voie est selon la deuxième trajectoire.

Ainsi, lorsque l'intervention du conducteur sur le coupe volant indique clairement sa volonté de changer de voie plus rapidement, le pilotage de changement de voie prend en compte la deuxième trajectoire préalablement calculée, la deuxième trajectoire ayant une durée de changement de voie plus courte que la première trajectoire. Le fait de calculer préalablement une deuxième trajectoire plus rapide évite d'avoir à calculer cette trajectoire en cours de manœuvre, l'adaptation du pilotage se fait plus rapidement et avec des ressources de calculs inférieures.

Un deuxième aspect de l'invention concerne un dispositif comprenant une mémoire associée à au moins un processeur configuré pour mettre en œuvre le procédé selon le premier aspect de l'invention.

L'invention concerne aussi un véhicule comportant le dispositif.

L'invention concerne aussi un programme d'ordinateur comprenant des instructions adaptées pour l'exécution des étapes du procédé, selon le premier aspect de l'invention, lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :
[Fig. 1] illustre schématiquement un dispositif, selon un exemple particulier de réalisation de la présente invention.
[Fig. 2] illustre schématiquement un procédé de conduite d'un véhicule, selon un exemple particulier de réalisation de la présente invention.

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

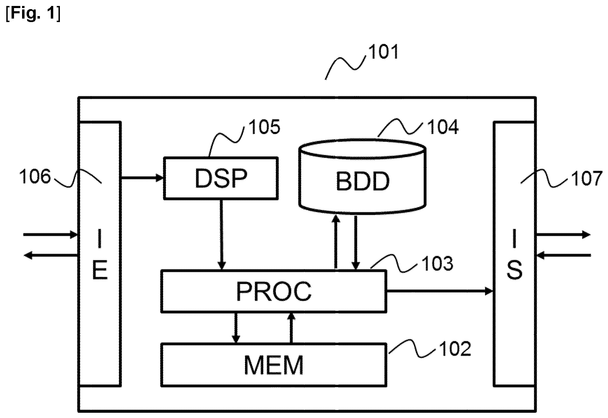

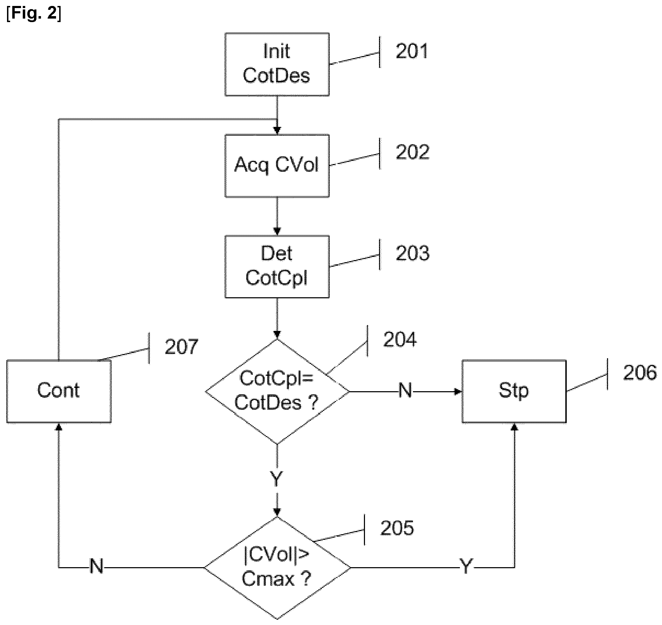

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en œuvre par un processeur 103 d'au moins une étape du procédé tel que décrit ci-avant. Le dispositif comporte aussi une mémoire de masse 104 pour le stockage de données destinées à être conservées après la mise en œuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en œuvre par le procédé selon l'invention et une interface de sortie 107 pour la transmission des données mises en œuvre par le procédé selon l'invention.

Le dispositif est alors apte à traiter, recevoir ou envoyer, des informations ou des mesures provenant d'un système de direction, d'un système de freinage, d'un système de moto-propulsion, et de systèmes d'aide à la conduite comme le maintien dans la voie ou de pilotage de changement de voie.

La figure 2 illustre schématiquement un procédé de conduite d'un véhicule autonome circulant sur une première voie de circulation, selon un exemple particulier de réalisation de la présente invention.

L'étape 201, Init CotDes, est une étape d'initialisation. Le système d'aide au changement de voie détermine les conditions de faisabilité et planifie une trajectoire pour aller d'une première voie, égo-voie, vers la deuxième voie, voie cible. Parmi les conditions de faisabilité, comme l'impose la réglementation actuelle, le système vérifie qu'une fonction de maintien dans la voie est activée. Une fonction de maintien dans la voie pilote le véhicule de manière autonome pour maintenir le véhicule au centre de la voie. Ainsi, en fin de manœuvre de changement de voie, le véhicule continue à être piloté.

La trajectoire détermine la position du véhicule à chaque instant entre l'instant du début de la manœuvre et 'instant de la fin de manœuvre. Classiquement, la trajectoire est calculée par un planificateur de trajectoire et se base sur une durée de manœuvre typiquement de l'ordre de 5 secondes. Dans un mode opératoire, une première trajectoire planifiée et une deuxième trajectoire planifiée sont calculées. La première trajectoire planifiée se base sur une durée de manœuvre de 5 secondes environ. La deuxième trajectoire planifiée se sur une durée de manœuvre plus courte entre 3 et 4 secondes.

Si les conditions de faisabilités sont réalisées, alors le système de changement de voie informe le conducteur par, par exemple, un message sur un combiné du véhicule. Le système de changement de voie, comme le prévois la réglementation actuelle, un accord du conducteur afin de procéder au changement de voie. Le message indique un côté, gauche ou droit, où la voie cible se trouve par rapport à l'égo-voie. Le conducteur manifeste son accord en, par exemple, activant un clignotant du côté où se situe la voie cible. Le conducteur désigne alors un côté désigné, CotDes.

Si le côté désigné correspond au côté où se situe la voie cible, alors le système exécute de manière autonome un changement de voie pilotant ledit véhicule autonome de la première voie de circulation vers la deuxième voie de circulation selon la trajectoire planifiée (ou la première trajectoire planifiée).

Par exemple, si le conducteur active les clignotants du côté gauche du véhicule, le côté désigné est le côté gauche.

Classiquement, un système d'aide au changement de voie comporte un dispositif de mesure du couple volant. L'étape 202, Acq CVol, réalise l'acquisition d'une information d'un couple volant résultant d'un effort de rotation appliqué sur le volant par le conducteur.

Dans l'étape 203, Det CotCpl, suivant le signe de l'information du couple volant, un côté, gauche ou droit, est déterminé. Ce côté est nommé côté couple CotCpl. Par exemple, si le conducteur applique un effort de rotation sur le volant pour tourner à gauche, le côté couple est le côté gauche.

L'étape 204, CotCpl=CotDes ?, teste si le côté couple est identique au côté désigné. Dans un mode de réalisation, si les deux côtés sont différents, alors le procédé passe dans l'étape 206 décrit ci-après.

Dans un autre mode de réalisation, si les deux côtés sont différents et si le la valeur absolue du couple volant est inférieure à un seuil minimum prédéterminé, alors le procédé retourne dans l'étape 203 et donc le pilotage de changement de voie n'est pas arrêté. Par exemple, le seuil minimum prédéterminé est de l'ordre de 0,7 N.m. C'est un seuil paramétrable.

Dans un autre mode de réalisation, avant de tester si le côté couple est identique au côté désigné, le procédé retourne dans l'étape 203 si la valeur absolue de l'information du couple volant est inférieure audit seuil minimum prédéterminé.

L'étape 205, |CVol|>Cmax ?, test si la valeur absolue de l'information couple volant est supérieure à un seuil maximum prédéterminé. Par exemple, le seuil maximum prédéterminé est de l'ordre de 1,5 N.m. C'est un seuil paramétrable.

Si la valeur absolue de l'information couple volant est supérieure audit seuil maximum prédéterminé, alors le procédé passe dans l'étape 206.

Si la valeur absolue de l'information couple volant est inférieure audit seuil maximum prédéterminé, alors le procédé passe dans l'étape 207.

L'étape 206, Stp, arrête le pilotage autonome de changement de voie. La « main » est redonné au conducteur qui doit alors piloter le véhicule.

L'étape 207, Cont, n'arrête pas le pilotage autonome. Le couple volant étant du côté de la voie cible, le véhicule se déplace alors plus rapidement vers le côté de la voie cible. Le véhicule quitte donc plus rapidement l'égo-voie.

Dans un mode de réalisation, le pilotage de changement de voie planifie une nouvelle trajectoire de changement de voie pour atteindre la voie cible plus rapidement. Cela entraine une dynamique latérale du véhicule plus importante (par exemple l'accélération transversale devient plus élevée). Cette augmentation de la dynamique latérale n'entraine pas une gêne pour le conducteur car c'est le conducteur qui est alors à l'initiative de cette augmentation.

Dans un autre mode de réalisation, le pilotage de changement de voie se base sur la deuxième trajectoire, plus rapide, initialement calculée dans l'étape 201.

La présente invention ne se limite pas aux formes de réalisation décrites ci-avant à titre d'exemples ; elle s'étend à d'autres variantes dans la limite de l'étendue de la protection déterminée par les revendications.

## Revendications

1. Procédé de conduite d'un véhicule autonome circulant sur une première voie de circulation, ledit procédé comportant les étapes de :
- Exécution (201) d'un changement de voie autonome pilotant ledit véhicule autonome de la première voie de circulation vers une deuxième voie de circulation selon une trajectoire planifiée, ladite deuxième voie de circulation étant une voie adjacente située sur un côté désigné, gauche ou droit, par rapport à la première voie de circulation ;
- Acquisition (202) d'une information d'un couple volant résultant d'un effort de rotation appliqué sur le volant par le conducteur ;
- Détermination (203) d'un côté, gauche ou droit, dit côté couple, en fonction de l'information du couple volant ;
- Si (204, 205) le côté couple est identique au côté désigné et
∘ Si la valeur absolue de l'information couple volant est supérieure à un seuil maximum prédéterminé, alors le pilotage de changement de voie est arrêté (206) ;
∘ Si la valeur absolue de l'information couple volant est inférieure audit seuil maximum prédéterminé, alors le pilotage de changement de voie est maintenu (207), ledit procédé étant **caractérisé par le fait que** lorsque le côté couple est le même que le côté désigné et lorsque la valeur absolue de l'information couple volant est comprise entre un seuil minimum prédéterminée et audit seuil maximum prédéterminé, alors la trajectoire planifiée est calculée de nouveau pour correspondre à une durée de changement de voie plus courte.

2. Procédé selon la revendication 1, dans lequel si le côté couple est différent au côté désigné, et si la valeur absolue de l'information couple volant est inférieure audit seuil minimum prédéterminé, alors le pilotage de changement de voie est maintenu.

3. Procédé selon l'une des revendications précédentes, dans lequel le procédé comporte une étape préliminaire de détermination d'une première trajectoire planifiée et d'une deuxième trajectoire planifiée, la deuxième trajectoire ayant une durée de manœuvre de changement de voie plus courte que la durée de changement de voie de la première trajectoire, et l'exécution (201) d'un changement de voie autonome pilotant ledit véhicule autonome de la première voie de circulation vers une deuxième voie de circulation est selon la première trajectoire planifiée, si le côté couple est identique au côté désigne, et si la valeur absolue de l'information couple volant est inférieure audit seuil maximum prédéterminé, alors le pilotage de changement de voie est selon la deuxième trajectoire.

4. Dispositif (101) comprenant une mémoire (102) associée à au moins un processeur (103) configuré pour mettre en œuvre le procédé selon l'une des revendications précédentes, le dispositif étant configuré pour envoyer des instructions à un véhicule autonome circulant sur une première voie de circulation et recevoir des données mises en oeuvre par le procédé selon la revendication 1.

5. Véhicule comportant le dispositif selon la revendication précédente.

6. Programme d'ordinateur comprenant des instructions adaptées pour l'exécution des étapes du procédé selon l'une des revendications 1 à 3 lorsque ledit programme est exécuté par au moins un processeur (103) d'un dispositif (101) selon la revendication 4.

## Patentansprüche

1. Verfahren zum Führen eines selbstfahrenden Fahrzeugs, das auf einer ersten Fahrspur fährt, wobei das Verfahren die folgenden Schritte umfasst:
- Ausführung (201) eines autonomen Spurwechsels, der das autonome Fahrzeug von der ersten Fahrspur auf eine zweite Fahrspur auf einer geplanten Fahrspur steuert, wobei die zweite Fahrspur eine benachbarte Fahrspur ist, die sich auf einer bestimmten linken oder rechten Seite der ersten Fahrspur befindet;
- Erfassung (202) von Informationen über ein Schwungraddrehmoment aufgrund einer vom Fahrer auf das Lenkrad ausgeübten Drehkraft;
- Bestimmung (203) einer linken oder rechten Seite, der so genannten Drehmomentseite, in Abhängigkeit von der Information über das fliegende Drehmoment;
- wenn (204, 205) die Drehmomentseite mit der angegebenen Seite identisch ist und
- wenn der Absolutwert der Informationen über das Flugmoment einen vorgegebenen Höchstwert überschreitet, wird die Spurwechselsteuerung angehalten (206);
- wenn der Absolutwert der Informationen über das Flugmoment unter dem vorgegebenen Höchstwert liegt, wird die Spurwechselsteuerung beibehalten (207),
das Verfahren ist **dadurch gekennzeichnet, dass** dann, wenn die Drehmomentseite die gleiche wie die bezeichnete Seite ist und der Absolutwert der Flugdrehmomentinformation zwischen einem vorbestimmten Minimalschwellwert und dem vorbestimmten Maximalschwellwert liegt, der geplante Weg neu berechnet wird, um einer kürzeren Spurwechseldauer zu entsprechen.

2. Verfahren nach Anspruch 1, bei dem, wenn die Drehmomentseite sich von der bezeichneten Seite unterscheidet und der Absolutwert der Flugdrehmomentinformation kleiner als der vorbestimmte Mindestschwellenwert ist, die Spurwechselsteuerung aufrechterhalten wird.

3. Verfahren nach einem der vorhergehenden Ansprüche, bei dem das Verfahren einen vorläufigen Schritt des Bestimmens einer ersten geplanten Bahn und einer zweiten geplanten Bahn umfasst, wobei die zweite Bahn eine kürzere Spurwechselmanövrierdauer als die Spurwechseldauer der ersten Bahn aufweist, und das Ausführen (201) eines autonomen Spurwechsels, der das autonome Fahrzeug von der ersten Fahrbahn zu einer zweiten Fahrbahn steuert, gemäß der ersten geplanten Bahn erfolgt, wenn die Drehmomentseite mit der designierten Seite identisch ist und der Absolutwert der Flugdrehmomentinformation unter dem vorbestimmten Maximalwert liegt, Die Steuerung des Spurwechsels folgt der zweiten Flugbahn.

4. Vorrichtung (101) mit einem Speicher (102), der mit mindestens einem Prozessor (103) verbunden ist, der so konfiguriert ist, dass er das Verfahren nach einem der vorhergehenden Ansprüche ausführt, wobei die Vorrichtung so konfiguriert ist, dass sie einem autonomen Fahrzeug, das auf einem ersten Fahrstreifen fährt, Anweisungen sendet und Daten empfängt, die durch das Verfahren nach Anspruch 1 ausgeführt werden.

5. Fahrzeug mit der Vorrichtung nach dem vorhergehenden Anspruch.

6. Computerprogramm, das Befehle umfasst, die geeignet sind, die Schritte des Verfahrens nach einem der Ansprüche 1 bis 3 auszuführen, wenn das Programm von mindestens einem Prozessor (103) einer Vorrichtung (101) nach Anspruch 4 ausgeführt wird.

## Claims

1. Method of driving an autonomous vehicle traveling on a first taxiway, the said method comprising the steps of:
- Execution (201) of a change of autonomous lane driving said autonomous vehicle from the first taxiway to a second taxiway according to a planned trajectory, said second taxiway being an adjacent lane located on a designated side, left or right, by report to the first taxiway;
- Acquisition (202) of steering wheel torque information resulting from a rotational force applied to the steering wheel by the driver;
- Determination (203) of a side, left or right, called the torque side, according to the information of the steering wheel torque;
- If (204, 205) the torque side is identical to the designated side and
- If the absolute value of the steering wheel torque information is greater than a predetermined maximum threshold, then the lane change control is stopped (206);
- If the absolute value of the steering wheel torque information is less than said predetermined maximum threshold, then the lane change control is maintained (207),
the said method being **characterized in that** when the torque side is the same as the designated side and when the absolute value of the steering wheel torque information is between a predetermined minimum threshold and said predetermined maximum threshold, then the planned trajectory is again calculated to correspond to a shorter lane change time.

2. Method according to claim 1, wherein if the torque side is different from the designated side, and if the absolute value of the torque steering wheel information is less than said predetermined minimum threshold, then the lane change control is maintained.

3. Method according to one of the previous claims, in which the method comprises a preliminary step of determining a first planned trajectory and a second planned trajectory, the second trajectory having a lane change maneuver time shorter than the lane change duration of the first trajectory, and the execution (201) of an autonomous lane change driving said autonomous vehicle from the first taxiway to a second taxiway is according to the first planned trajectory, if the torque side is identical to the designated side, and if the absolute value of the steering wheel torque information is less than said predetermined maximum threshold, then the lane change control is according to the second trajectory.

4. Device (101) comprising a memory (102) associated with at least one processor (103) configured to implement the method according to one of the previous claims, the device being configured to send instructions to an autonomous vehicle traveling on a first road and to receive data implemented by the method according to claim 1.

5. Vehicle comprising the device according to the previous claim.

6. Computer Plan comprising instructions adapted for executing the steps of the method according to one of claims 1 to 3 when said plan is executed by at least one processor (103) of a device (101) according to claim 4.
